# EUROPEAN PATENT APPLICATION

(11) **EP 2 670 188 A1**
(43) Date of publication of application: **04.12.2013**
(21) Application number: 11857098.5
(22) Date of filing: 21.09.2011
(51) Int. Cl.: H04W 28/00

(54) **CQI REPORTING METHOD, CQI ACQUISITION METHOD, SYSTEM, TERMINAL AND BASE STATION**

(30) Priority: 26.01.2011 CN 201110028493
(71) Applicant: Huawei Technologies Co., Ltd., Shenzhen, Guangdong 518129 (CN)
(72) Inventor: YU, Yang, Shenzhen Guangdong 518129 (CN); ZHANG, Shunqing, Shenzhen Guangdong 518129 (CN)
(74) Representative: Thun, Clemens
(86) International application number: PCT/CN2011/079908
(87) International publication number: WO 2012/100549

(57) **Abstract**

A CQI reporting method, a CQI acquisition method, a system, a terminal and a base station are provided in the embodiments of the present invention. The CQI reporting method comprises the following steps of: after completing downlink synchronization, a terminal reporting a CQI to a base station according to a CQI reporting cycle within a preset time; determining whether the difference between the CQI within the current CQI reporting cycle and a CQI reported last time is less than a preset threshold when the preset time is exceeded, and if yes, stopping sending the CQI within the current CQI reporting cycle to the base station. In the present invention, the base station can flexibly choose, according to the CQI change condition, whether to report the CQI to the base station, so when the CQI of the terminal is not obviously changed, the transmitting power of the terminal may be decreased by reducing the number of times of reporting the CQI, so as to effectively improve the uplink transmission capacity and reduce the uplink transmission interference.

## Description

### Field of the Invention

The present invention relates to the technical field of wireless communications, and particularly, to a Channel Quality Indication (CQI) reporting method, a CQI acquisition method, a system, a terminal and a base station.

### Background of the Invention

In the Universal Mobile Telecommunications System (UMTS), the Hybrid Automatic Repeat Request (HARQ) technology is used to ensure the reliability of data transmission. When the previous data transmission is failed, the terminal requests the base station to retransmit data through the HARQ. When a data retransmission is carried out through the HARQ, the base station requires the User Equipment (UE) to report the quality of the data transmission channel, and the UE feeds back channel quality information to the base station through the CQI.

In the prior art, the UE usually reports the CQI in a certain period. But when the UE is in a state having no data transmission, it still reports the CQI periodically, which leads to energy loss at the UE side. Although the base station may change the CQI reporting frequency of UE by reconfiguring the air interface, frequent reconfigurations based on the HARQ conditions also consume the UE side power, and communication interruptions of the UE side users may be easily caused.

### Summary of the Invention

The embodiments of the present invention provide a CQI reporting method, a CQI acquisition method, a system, a terminal and a base station, so as to solve the problem that the prior CQI report mode easily causes terminal energy loss.

In order to solve the above technical problem, the embodiments of the present invention disclose the following technical solutions:

A Channel Quality Indication (CQI) reporting method, comprising:
reporting, by a terminal, a CQI to a base station according to a CQI reporting cycle within a preset time, after completing downlink synchronization; and
determining whether the difference between the CQI within the current CQI reporting cycle and a CQI reported last time is less than a preset threshold when the preset time is exceeded, and if yes, stopping sending the CQI within the current CQI reporting cycle to the base station.

A Channel Quality Indication (CQI) acquisition method, comprising:
detecting a CQI reported by a terminal according to a Transmission Time Interval (TTI);
if the CQI reported by the terminal is detected, acquiring current CQI information from the CQI; and
if the CQI reported by the terminal is not detected, taking CQI information acquired when the terminal reported a CQI last time as current CQI information.

A Channel Quality Indication (CQI) reporting system, comprising a terminal and a base station,
the terminal is configured to report a CQI to the base station according to a CQI reporting cycle within a preset time after completing downlink synchronization, determine whether the difference between the CQI within the current CQI reporting cycle and a CQI reported last time is less than a preset threshold when the preset time is exceeded, and if yes, stop sending the CQI within the current CQI reporting cycle to the base station;
the base station is configured to detect the CQI reported by the terminal according to a Transmission Time Interval (TTI); if the CQI reported by the terminal is detected, acquire current CQI information from the CQI, and if the CQI reported by the terminal is not detected, take CQI information acquired when the terminal reported the CQI last time as current CQI information.

A Channel Quality Indication (CQI) reporting terminal, comprising:
a reporting unit configured to report a CQI to a base station according to a CQI reporting cycle within a preset time after the terminal completes downlink synchronization;
a determining unit configured to determine whether the difference between the CQI within the current CQI reporting cycle and a CQI reported last time is less than a preset threshold when the preset time is exceeded; and
a controlling unit configured to control the reporting unit to stop sending the CQI within the current CQI reporting cycle to the base station, when the determining unit determines that the difference between the CQI within the current CQI reporting cycle and the CQI reported last time is less than the preset threshold.

A base station, comprising:
a detecting unit configured to detect a Channel Quality Indication (CQI) reported by a terminal according to a Transmission Time Interval (TTI); and
an acquiring unit configured to, if the CQI reported by the terminal is detected, acquire current CQI information from the CQI; and if the CQI reported by the terminal is not detected, take CQI information acquired when the terminal reported a CQI last time as current CQI information.

As can be seen from the descriptions of the above embodiments, after completing downlink synchronization, a terminal reports a CQI to a base station according to a CQI reporting cycle within a preset time; determines whether the difference between the CQI within the current CQI reporting cycle and a CQI reported last time is less than a preset threshold when the preset time is exceeded, and if yes, stops sending the CQI within the current CQI reporting cycle to the base station. In the embodiments of the present invention, the base station can flexibly choose, according to the CQI change condition, whether to report the CQI to the base station, rather than reporting the CQI in each CQI reporting cycle, so when the CQI of the terminal is not obviously changed, the transmitting power of the terminal may be decreased by reducing the number of times of reporting the CQI, so as to effectively improve the uplink transmission capacity and reduce the uplink transmission interference.

### Brief Description of the Drawings

In order to more clearly describe the technical solutions in the prior art or the embodiments of the present invention, the drawings to be used in the descriptions of the prior art or the embodiments are briefly introduced as follows. Obviously, the following drawings just illustrate some embodiments of the present invention, and a person skilled in the art can obtain other drawings from these drawings without paying a creative effort.
Fig. 1 is a flowchart of a first embodiment of a CQI reporting method according to the present invention;
Fig. 2A is a flowchart of a second embodiment of a CQI reporting method according to the present invention;
Fig. 2B is a flowchart of an embodiment of a CQI acquisition method according to the present invention;
Fig. 3 is a block diagram of an embodiment of a CQI reporting system according to the present invention;
Fig. 4 is a block diagram of a first embodiment of a CQI reporting terminal according to the present invention;
Fig. 5 is a block diagram of a second embodiment of a CQI reporting terminal according to the present invention;
Fig. 6 is a block diagram of a third embodiment of a CQI reporting terminal according to the present invention; and
Fig. 7 is a block diagram of an embodiment of a base station according to the present invention.

### Detailed Description of the Preferred Embodiments

The following embodiments of the present invention provide a CQI reporting method, a CQI acquisition method, a system, a terminal and a base station.

In order that a person skilled in the art better understands the technical solutions in the embodiments of the present invention, and the objects, features and advantages of the embodiments of the present invention are more obvious and understandable, the technical solutions in the embodiments of the present invention will be further detailedly described as follows with reference to the drawings.

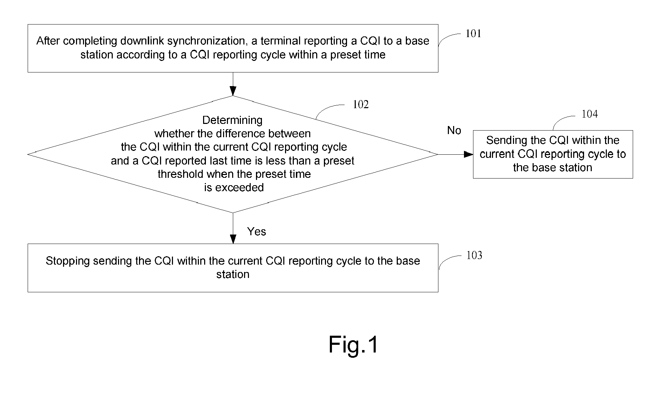

Referring to Fig. 1, which is a flowchart of a first embodiment of a CQI reporting method according to the present invention.

Step 101: after completing downlink synchronization, a terminal reporting a CQI to a base station according to a CQI reporting cycle within a preset time.

When downlink synchronization is initially completed, the transmission channel is unstable, and the terminal shall continuously send the CQI for a certain time to detect the channel quality, thus the preset time is the protection time of the initial moment.

Step 102: determining whether the difference between the CQI within the current CQI reporting cycle and a CQI reported last time is less than a preset threshold when the preset time is exceeded; if yes, performing step 103, otherwise performing step 104.

When the timer is expired, the terminal enters a CQI dynamic adjustment state, and determines whether to report CQI to the base station according to the CQI change condition. In the embodiment of the present invention, the determination of whether the difference between the CQI within the current CQI reporting cycle and the CQI reported last time is less than the preset threshold includes not only the condition that the two CQIs are completely the same, but also the condition that the difference between the current CQI and the CQI reported last time is within a certain range, which indicates that the CQI is not obviously changed in two adjacent cycles.

Step 103: stopping sending the CQI within the current CQI reporting cycle to the base station.

When the difference between the CQI within the current CQI reporting cycle and the CQI reported last time is less than the preset threshold, the terminal no longer sends the CQI within the current CQI reporting cycle to the base station, thereby decreasing the number of times of reporting the CQI, reducing the terminal transmitting power, effectively improving the uplink transmission capacity and reducing the uplink transmission interference.

Step 104: sending the CQI within the current CQI reporting cycle to the base station.

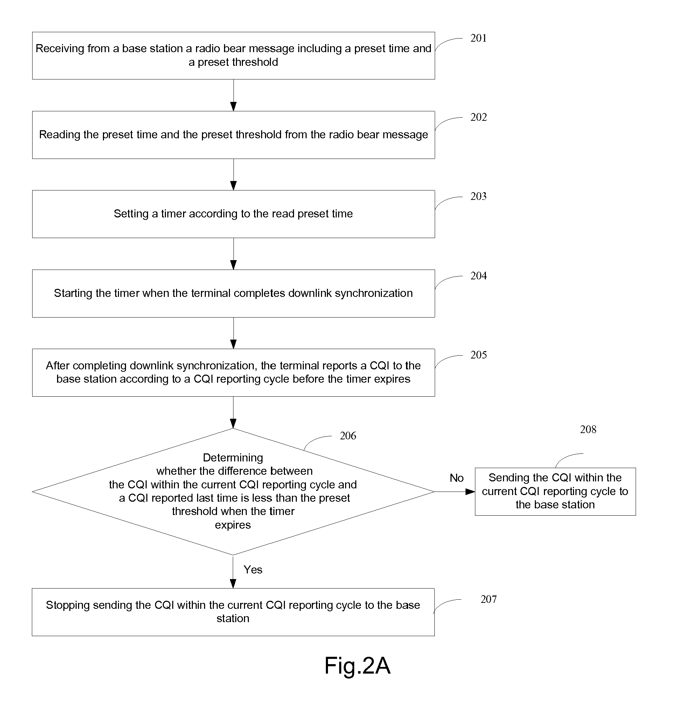

Referring to Fig. 2A, which is a flowchart of a second embodiment of a CQI reporting method according to the present invention.

Step 201: receiving from a base station a radio bear message including a preset time and a preset threshold.

When the terminal establishes downlink synchronization with the base station, it sends to the base station a radio bear message (e.g., Radio Bear Setup or Radio Bear Reconfiguration). The radio bear message includes a preset time T1., As the transmission channel is unstable when downlink synchronization is initially completed, the terminal shall continuously send the CQI for a certain time to detect the channel quality, thus T1 is the protection time of the initial moment. The radio bear message further includes a preset threshold, which is a criterion for determining whether the CQI within the current cycle shall be reported, as compared with the CQI within the previous cycle. The preset threshold may include an uplink preset threshold and a downlink preset threshold, respectively.

In the process of initial synchronization with the network side, although the terminal has a CQI reporting capability, an erroneous CQI demodulation may exist since the initial synchronization is still not completed at the base station side, thus the terminal may not report the CQI before the synchronization with the network side is completed.

Step 202: reading the preset time and the preset threshold from the radio bear message.

Step 203: setting a timer according to the read preset time.

Step 204: starting the timer when the terminal completes downlink synchronization.

Step 205: after completing downlink synchronization, the terminal reports a CQI to the base station according to a CQI reporting cycle before the timer expires.

Step 206: determining whether the difference between the CQI within the current CQI reporting cycle and a CQI reported last time is less than the preset threshold when the timer expires; if yes, performing step 207, otherwise performing step 208.

When the timer is expired, the terminal enters a CQI dynamic adjustment state, and determines whether to report CQI to the base station according to the CQI change condition, i.e., determining whether the difference between the CQI within the current CQI reporting cycle and the CQI reported last time is less than the preset threshold, e.g., the CQI within the current CQI reporting cycle and the CQI reported last time may be the same, or the difference between the current CQI and the CQI reported last time falls within a certain range.

Assuming that the current CQI within the current CQI reporting cycle is CQI now, and the CQI reported last time is CQI last. If CQI now is approximately equal to CQI last, i.e., the difference between CQI now and CQI last is within a preset range, CQI now is no longer reported, and CQI last is assigned to be equal to CQI now.

Step 207: stopping sending the CQI within the current CQI reporting cycle to the base station.

When the difference between the CQI within the current CQI reporting cycle and the CQI reported last time is less than the preset threshold, the terminal no longer reports the CQI within the current CQI reporting cycle, thereby decreasing the number of times of reporting the CQI, reducing the terminal transmitting power, effectively improving the uplink transmission capacity and reducing the uplink transmission interference.

Step 208: sending the CQI within the current CQI reporting cycle to the base station.

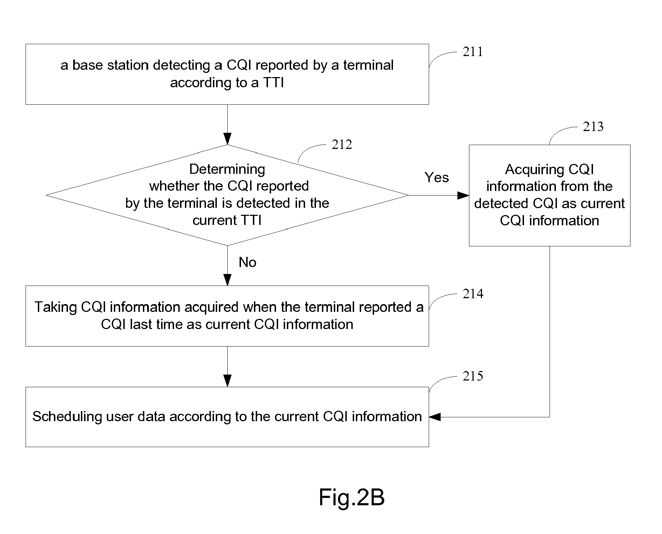

Referring to Fig. 2B, which is a flowchart of an embodiment of a method for acquiring reported CQI at a base station side corresponding to the embodiment of a method for a terminal to report CQI according to the present invention.

Step 211: a base station detecting a CQI reported by a terminal according to a Transmission Time Interval (TTI).

The base station detects a CQI reported by a UE in each TTI.

Step 212: determining whether the CQI reported by the terminal is detected in the current TTI; if yes, performing step 213, otherwise performing step 214.

Since the terminal may not report the CQI when the CQI is not obviously changed, the base station may not detect any CQI in some TTIs.

Step 213: acquiring CQI information from the detected CQI as current CQI information, and performing step 215.

Step 214: taking CQI information acquired when the terminal reported a CQI last time as current CQI information.

When the CQI reported by the terminal is not detected, it means that the channel quality is not obviously changed, and the current CQI information defaults to the CQI information acquired when the terminal reported the CQI last time.

Step 215: scheduling user data according to the current CQI information.

In correspondence to the embodiment of the CQI reporting method according to the present invention, the present invention further provides embodiments of a system, a terminal and a base station for reporting CQI.

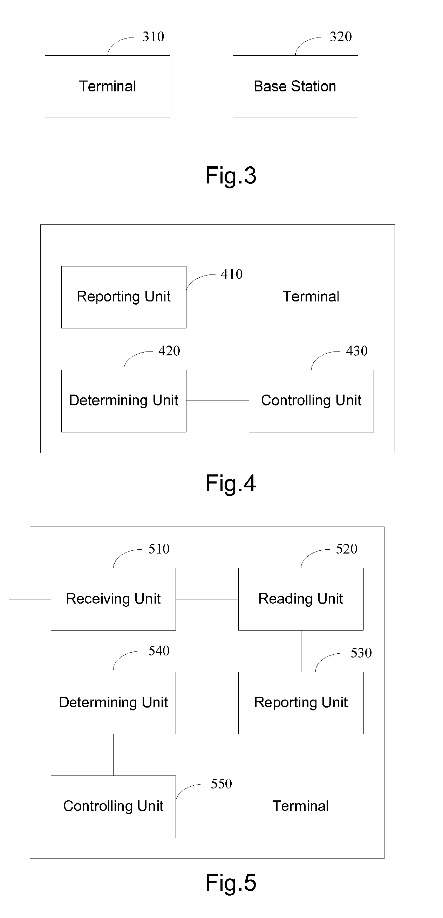

Referring to Fig. 3, which is a block diagram of an embodiment of a CQI reporting system according to the present invention.

The system includes a terminal 310 and a base station 320.

In which, the terminal 310 is configured to report a CQI to the base station 320 according to a CQI reporting cycle within a preset time after completing downlink synchronization, determine whether the difference between the CQI within the current CQI reporting cycle and a CQI reported last time is less than a preset threshold when the preset time is exceeded, and if yes, stop sending the CQI within the current CQI reporting cycle to the base station.

The base station 320 is configured to detect the CQI reported by the terminal according to a TTI; if the CQI reported by the terminal is detected, acquire current CQI information from the CQI, and if the CQI reported by the terminal is not detected, take CQI information acquired when the terminal reported a CQI last time as current CQI information.

Further, the terminal 310 is further configured to receive a radio bear message sent by the base station 320, read the preset time and the preset threshold from the radio bear message, set a timer according to the read preset time, and start the timer when the terminal 310 completes downlink synchronization.

Further, the base station 320 is further configured to schedule user data according to the current CQI information.

Referring to Fig. 4, which is a block diagram of a first embodiment of a CQI reporting terminal according to the present invention.

The terminal includes: a reporting unit 410, a determining unit 420 and a controlling unit 430.

In which, the reporting unit 410 is configured to report a CQI according to a CQI reporting cycle within a preset time after the terminal completes downlink synchronization;
the determining unit 420 is configured to determine whether the difference between the CQI within the current CQI reporting cycle and a CQI reported last time is less than a preset threshold when the preset time is exceeded; and
the controlling unit 430 is configured to control the reporting unit to stop sending the CQI within the current CQI reporting cycle to the base station, when the determining unit 420 determines that the difference between the CQI within the current CQI reporting cycle and the CQI reported last time is less than the preset threshold.

Referring to Fig. 5, which is a block diagram of a second embodiment of a CQI reporting terminal according to the present invention.

The terminal includes a receiving unit 510, a reading unit 520, a reporting unit 530, a determining unit 540 and a controlling unit 550.

In which, the receiving unit 510 is configured to receive from a base station a radio bear message including a preset time and a preset threshold;
the reading unit 520 is configured to read the preset time and the preset threshold from the radio bear message;
the reporting unit 530 is configured to report a CQI to a base station according to a CQI reporting cycle within the preset time after the terminal completes downlink synchronization;
the determining unit 540 is configured to determine whether the difference between the CQI within the current CQI reporting cycle and a CQI reported last time is less than the preset threshold when the preset time is exceeded; and
the controlling unit 550 is configured to control the reporting unit to stop sending the CQI within the current CQI reporting cycle to the base station, when the determining unit 540 determines that the difference between the CQI within the current CQI reporting cycle and the CQI reported last time is less than the preset threshold.

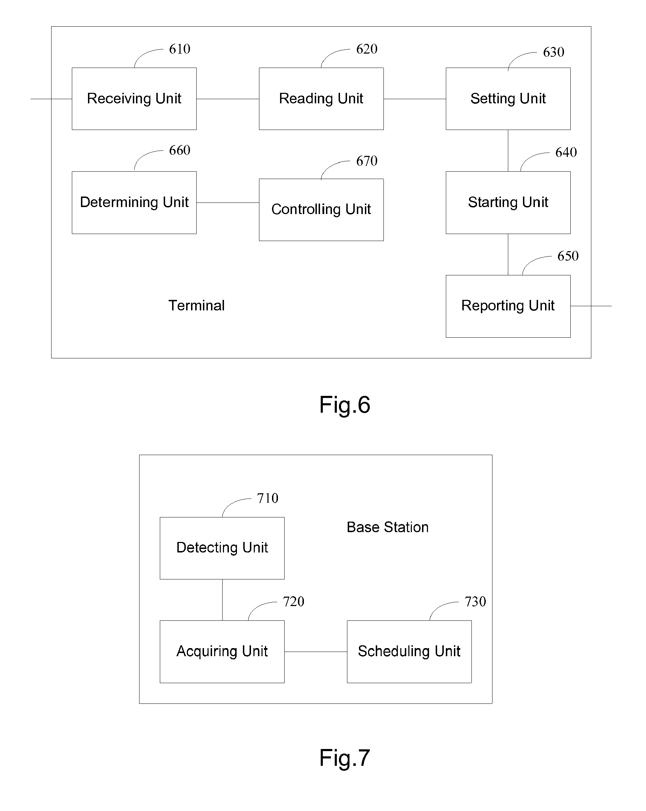

Referring to Fig. 6, which is a block diagram of a third embodiment of a CQI reporting terminal according to the present invention.

The terminal includes a receiving unit 610, a reading unit 620, a setting unit 630, a starting unit 640, a reporting unit 650, a determining unit 660 and a controlling unit 670.

In which, the receiving unit 610 is configured to receive from a base station a radio bear message including a preset time;
the reading unit 620 is configured to read the preset time from the radio bear message;
the setting unit 630 is configured to set a timer according to the read preset time;
the starting unit 640 is configured to start the timer when the terminal completes downlink synchronization;
the reporting unit 650 is configured to report a CQI to a base station according to a CQI reporting cycle before the timer expires, when the terminal completes downlink synchronization;
the determining unit 660 is configured to determine whether the difference between the CQI within the current CQI reporting cycle and a CQI reported last time is less than a preset threshold when the timer expires; and
the controlling unit 670 is configured to control the reporting unit to stop sending the CQI within the current CQI reporting cycle to the base station, when the determining unit determines that the difference between the CQI within the current CQI reporting cycle and the CQI reported last time is less than the preset threshold.

Referring to Fig. 7, which is a block diagram of an embodiment of a base station according to the present invention.

The base station includes a detecting unit 710, an acquiring unit 720 and a scheduling unit 730.

The detecting unit 710 is configured to detect a CQI reported by a terminal according to a TTI; and
the acquiring unit 720 is configured to, if the CQI reported by the terminal is detected, acquire current CQI information from the CQI, and if the CQI reported by the terminal is not detected, take CQI information acquired when the terminal reported a CQI last time as current CQI information.

Further, the base station may further include a scheduling unit 730 configured to schedule user data according to the current CQI information.

As can be seen from the descriptions of the above embodiments, after completing downlink synchronization, a terminal reports a CQI to a base station according to a CQI reporting cycle within a preset time; determines whether the difference between the CQI within the current CQI reporting cycle and a CQI reported last time is less than a preset threshold when the preset time is exceeded, and if yes, stops sending the CQI within the current CQI reporting cycle to the base station. In the embodiments of the present invention, the base station can flexibly choose, according to the CQI change condition, whether to report the CQI to the base station, rather than reporting the CQI in each CQI reporting cycle, so when the CQI of the terminal is not obviously changed, the transmitting power of the terminal may be decreased by reducing the number of times of reporting the CQI, so as to effectively improve the uplink transmission capacity and reduce the uplink transmission interference.

A person skilled in the art will clearly appreciate that the technology in the present invention may be implemented by means of software and necessary general hardware platform. Based on such understanding, the technical solutions in the embodiments of the present invention substantively, or parts thereof making a contribution to the prior art, may be reflected in the form of computer software product stored in a storage medium, such as ROM/RAM, magnetic disc, optical disc etc., including several instructions that enable a computer device (e.g., personal computer, server or network device) to execute the methods according to respective or parts of embodiments of the present invention.

Finally to be noted, the above embodiments are just used to describe the technical solutions of the present invention, rather than making limitations thereto. Although the present invention is described in details with reference to the above embodiments, a person skilled in the art shall appreciate that, the technical solutions of the above embodiments can be modified, or some technical features thereof can be equivalently substituted, while those modifications or substitutions do not cause the essences of corresponding technical solutions to deviate from the spirit and range of the technical solutions of the embodiments of the present invention.

## Claims

1. A Channel Quality Indication (CQI) reporting method, comprising:
Reporting, by a terminal, a CQI to a base station according to a CQI reporting cycle within a preset time, after completing downlink synchronization; and
Determining whether the difference between the CQI within the current CQI reporting cycle and a CQI reported last time is less than a preset threshold when the preset time is exceeded, and if yes, stopping sending the CQI within the current CQI reporting cycle to the base station.

2. The method according to claim 1, further comprising:
receiving from the base station a radio bear message comprising the preset time and the preset threshold; and
reading the preset time and the preset threshold from the radio bear message.

3. The method according to claim 2, further comprising:
setting a timer according to the preset time; and
starting the timer when the terminal completes downlink synchronization.

4. A Channel Quality Indication (CQI) acquisition method, comprising:
detecting a CQI reported by a terminal according to a Transmission Time Interval (TTI);
if the CQI reported by the terminal is detected, acquiring current CQI information from the CQI; and
if the CQI reported by the terminal is not detected, taking CQI information acquired when the terminal reported a CQI last time as current CQI information.

5. The method according to claim 4, further comprising: scheduling user data according to the current CQI information.

6. A Channel Quality Indication (CQI) reporting system, comprising a terminal and a base station,
the terminal is configured to report a CQI to the base station according to a CQI reporting cycle within a preset time after completing downlink synchronization, determine whether the difference between the CQI within the current CQI reporting cycle and a CQI reported last time is less than a preset threshold when the preset time is exceeded, and if yes, stop sending the CQI within the current CQI reporting cycle to the base station;
the base station is configured to detect the CQI reported by the terminal according to a Transmission Time Interval (TTI); if the CQI reported by the terminal is detected, acquire current CQI information from the CQI, and if the CQI reported by the terminal is not detected, take CQI information acquired when the terminal reported the CQI last time as current CQI information.

7. The system according to claim 6, wherein,
the terminal is further configured to receive a radio bear message sent by the base station, read the preset time and the preset threshold from the radio bear message, set a timer according to the read preset time, and start the timer when the terminal completes downlink synchronization.

8. The system according to claim 6, wherein,
the base station is further configured to schedule user data according to the current CQI information.

9. A Channel Quality Indication (CQI) reporting terminal, comprising:
a reporting unit configured to report a CQI to a base station according to a CQI reporting cycle within a preset time after the terminal completes downlink synchronization;
a determining unit configured to determine whether the difference between the CQI within the current CQI reporting cycle and a CQI reported last time is less than a preset threshold when the preset time is exceeded; and
a controlling unit configured to control the reporting unit to stop sending the CQI within the current CQI reporting cycle to the base station, when the determining unit determines that the difference between the CQI within the current CQI reporting cycle and the CQI reported last time is less than the preset threshold.

10. The terminal according to claim 9, further comprising:
a receiving unit configured to receive from a base station a radio bear message comprising the preset time and the preset threshold; and
a reading unit configured to read the preset time and the preset threshold from the radio bear message.

11. The terminal according to claim 10, further comprising:
a setting unit configured to set a timer according to the read preset time; and
a starting unit configured to start the timer when the terminal completes downlink synchronization.

12. A base station, comprising:
a detecting unit configured to detect a Channel Quality Indication (CQI) reported by a terminal according to a Transmission Time Interval (TTI); and
an acquiring unit configured to, if the CQI reported by the terminal is detected, acquire current CQI information from the CQI; and if the CQI reported by the terminal is not detected, take CQI information acquired when the terminal reported a CQI last time as current CQI information.

13. The base station according to claim 12, further comprising:
a scheduling unit configured to schedule user data according to the current CQI information.
